# EUROPEAN PATENT SPECIFICATION

(11) **EP 1 190 105 B1**
(45) Date of publication and mention of the grant of the patent: **18.12.2002**
(21) Application number: 00927558.7
(22) Date of filing: 10.05.2000
(51) Int. Cl.: C22B 11/00, C22B 3/08, C22B 3/18

(54) **RECOVERY OF NOBLE METALS BY LIXIVIATION WITH THIOUREA CONTROLLED ACIDIC SOLUTION**
GEWINNUNG VON EDELMETALLEN DURCH KONTROLLIERTE LAUGUNG IN SAURER THIOUREA-LÖSUNG
RECUPERATION DE METAUX PRECIEUX PAR LIXIVIATION AVEC UNE SOLUTION ACIDE DE THIOUREE REGULEE

(30) Priority: 10.05.1999 GB 9910548
(43) Date of publication of application: 27.03.2002
(73) Proprietor: Rio Tinto Technology Development Ltd., Castlemead, Bristol BS99 7YR (GB); Minmet PLC, Dublin 2 (IE); Dublin Institute of Technology, Dublin 8 (IE)
(72) Inventor: KAVANAGH, Peter, Dublin 8 (IE); FOLEY, Barry, Dublin 8 (IE); SMALLEY, Nigel, Castlemead, Bristol BS99 7YR (GB)
(74) Representative: Beck, Alexander, Dipl.-Ing.
(86) International application number: GB0001790
(87) International publication number: WO00068446

(56) References cited:
- GB-A- 2 181 452
- US-A- 4 342 591
- US-A- 4 561 947
- DATABASE WPI Section Ch, Week 199404 Derwent Publications Ltd., London, GB; Class E16, AN 1994-026569 XP002145178 & BR 9 201 457 A (NOBRE G H), 19 October 1993 (1993-10-19)
- UBALDINI S ET AL: "An innovative thiourea gold leaching process" HYDROMETALLURGY,NL,ELSEVIER SCIENTIFIC PUBLISHING CY. AMSTERDAM, vol. 48, no. 1, 1 March 1998 (1998-03-01), pages 113-124, XP004112394 ISSN: 0304-386X

## Description

### BACKGROUND OF THE INVENTION

### Field of the Invention

The present invention relates to processes for recovering noble metals from material containing the same and, more particularly, to processes for recovering noble metals such as silver and gold from ores and other materials. More particularly, the present invention relates to an improved process for the extraction of noble metals by lixiviation from ores containing the same, which process is efficient and environmentally more acceptable in comparison with cyanide leaching processes.

### Description of the Prior Art

At present, cyanide solution is the most commonly used lixiviant in industrial processes for the extraction and recovery of precious metals from ores. There are a number of advantages of using cyanide which account for its wide acceptance at the present time including:
- It provides good reaction kinetics.
- The leach mechanisms and chemistry are well understood.
- It is easy to recover the gold from solution using carbon adsorption, ion exchange or cementation.
- Methods exist to detoxify waste solutions and to decontaminate treated ore.

On the other hand, the use of cyanide lixiviation carries a number of disadvantages:
- Cyanide lixiviation must be carried out in alkaline solution to avoid the evolution of toxic hydrogen cyanide gas. Accordingly, the cost of acid neutralisation for pH control may be high where the material to be leached is particularly acidic or acid generating, as would be the case, for example, with the product of a bacterial leaching process.
- Cyanide consumption may be high where the material contains other cyanide-soluble metals, including, for example, soluble Fe, Cu, Zn, As and Sb species.
- Cyanide solutions have short to medium term acute toxicity to mammals, birds and fish and heightening environmental concerns may increasingly restrict the use of cyanide based processes.

There are many difficult-to-treat ores and other materials in existence which are either acid generating or which contain such cyanide-soluble constituents, along with significant quantities of silver, gold and other precious metals in relation to which cyanide techniques are inefficient or simply uneconomic. Even in cases where the use of cyanide is technically viable, the emergence of stricter regulatory requirements may delay or prevent the use of such processes, or result in increased costs of controlling effluent emissions.

Various lixiviating agents other than cyanide have been investigated as potential replacements for cyanide-based solutions. One such process is disclosed in U.S. Pat. No. 4,369,061, issued to Kerley. Jr. on Jan. 18, 1983, which process utilises ammonium thiosulfate liquor as the lixiviating agent in the presence of copper.

Other processes, including that disclosed in U.S. Pat. No.4,342,591, issued to Lesoille on Aug. 3, 1982, utilise thiourea as a lixiviating agent. The ores are required to be preconditioned by subjecting them to reducing roasting, oxidation roasting followed by a first lixiviation with sulphuric acid and a second lixiviation with a sulphuric acid thiourea solution containing 10-50 g/l at a pH of 0.7 to 1.5 at a temperature of 20 degrees to 70 degrees C. and controlling the Redox potential of the solution to between about 100 and 180 mV in order to limit the consumption of thiourea (measured with reference to a calomel reference electrode in a solution of quinhydrone).

Schulze US Patent 4,561,947 issued to SKW Trostberg AG (1985) describes a process for the hydrometallurgical recovery of noble metals, from materials containing them, by treatment with thiourea in an aqueous, acidic medium in the presence of an oxidising agent and a reducing agent the improvement wherein the aqueous medium simultaneously contains an oxidising agent and a reducing agent and wherein there is maintained a Redox potential of 250 to 650 mV against Ag/Ag-Cl in the said medium. The reducing agent is to be added in an amount such that only the oxidised thiourea (i.e. formamidine disulphide) is reformed to thiourea.

Kenna US Patent 5,260 040 issued to CRA Services Ltd (1993) describes a hydrometallurgical process for the recovery of gold from a gold bearing material by utilising an acidic lixiviant solution containing thiourea and ferric ion to dissolve gold from the gold-bearing material the improvement comprising including in the lixiviant solution a complexing agent for ferric ion.

As noted by Kenna, one of the main drawbacks of using thiourea in the presence of oxidising agents such as ferric ion in the medium is the excessive oxidative degradation of thiourea. An initial oxidation of thiourea to formamidine disulphide followed by a further irreversible degradation of formamidine disulphide to elemental sulphur, cyanamide and thiourea. Whereas Schulze proposed to prevent such degradation by the use of a reducing agent (as necessary) in the presence of an oxidising agent, Kenna proposed to reduce the aggressive oxidising power of ferric ion by complexation with a complexing agent such as oxalic acid. Kenna's results, however show that only 68.7% of the available gold was extracted after a 32 day leaching period in a column leach test.

### SUMMARY OF THE INVENTION

The present invention provides a process for the hydrometallurgical recovery of noble metals from materials containing them by lixiviation with an aqueous acidic solution of thiourea in the presence of an oxidising agent and a reducing agent, the concentration of thiourea in the solution is determined by analysis and an amount of oxidising agent or reducing agent is added to the solution characterised in that the concentration of formamidine disulphide in the solution is determined by analysis and the added amount of oxidising agent or reducing agent is controlled to maintain the molar ratio of thiourea: formamidine disulphide to between 2: 1 and 5:1.

We have found that, under such conditions, high extraction, in the region of 90% in the case of gold, for example, can be achieved in relatively short reaction times while at the same time the irreversible degradation of thiourea may be suppressed. Not only may the loss by chemical degradation of thiourea be significantly reduced but, perhaps more importantly, by avoiding sulphur precipitation the passivation of noble metal particles by the coating of reaction surfaces with sulphur is avoided. Also it reduces blinding of adsorbent surfaces such as activated carbon used in the recovery of the noble metals from solution.

The efficient recovery of noble metal values may, however, be adversely affected by the presence of significant levels of soluble iron and copper components in the materials and in such cases it is preferable to precondition the material by acid leaching to substantially remove acid soluble components.

The quantitative determination of the thiourea and formamidine disulphide components in the solution may be determined by any suitable analytical method. For on line process control, it is preferred to use High Pressure Liquid Chromatographic analytic techniques. Fast and reliable determinations of the ratio between these components may thereby be obtained, facilitating automatic control of the addition of oxidising or reducing agent, as may be required to maintain a predetermined ratio between these components.

The maintenance of the said ratio between thiourea and formamidine disulphide in the solution by the addition of an oxidising or reducing agent will produce a corresponding Redpx potential associated with this reaction couple, However, in the lixiviation of complex materials, various other oxidation-reduction reaction couples occur and, accordingly, the Redox potential (Eh) of the leach solution bears no relation the thiourea: formamidine disulphide ratio. To overcome this problem, the Eh of the leach solution may be measured before (or after) a quantitative chemical determination of the thiourea: formamidine ratio so that the measured Eh may be calibrated with reference to the measured thiourea : formamidine ratio. The Eh of the leach solution may be monitored between successive chemical determinations of the thiourea: formamidine ratio to provide a continuous estimation of the said ratio and to control the addition of oxidising or reducing agent to maintain the ratio within predetermined limits.

The process is operable over a fairly wide range of thiourea concentration in the solution. However, we have found that increasing thiourea concentration above about 15g/l in the treatment of some typical materials has little or no benefit on leach kinetics and higher concentrations may in some cases increase consumption.

Accordingly preferred thiourea concentrations, at least for the treatment of gold ores, are generally in the range from about 1 g/l to about 15g/l.

The acidity of the leach solution materially affects the leach kinetics, which have been found to decrease above about pH 2.0.

Accordingly, it is preferred to maintain the pH of the solution in the range of about : 0.5 to 2.

Preferably, the acid employed is sulphuric acid. This acid is low cost and commonly used within the mining industry.

A preferred operating temperature is between 18 and 30 degrees C and more preferably is about 25 degrees C, the decomposition of thiourea proceeding to some extent above 30 degrees C.

The solids to liquid ratio in a slurry formed by fully dispersing particulate material in the solution may be within the range of 10 to 60% solids w/w and more preferably in the ratio of 1: 1 w/w

In view of the throughput rates required for large industrial processes, it is envisaged that the lixiviation will be appropriately carried out in a plurality of stages and preferably as a continuous multi -stage process in which a slurry is successively transferred through a series of leaching vessels.

In such cases it is desirable that the thiourea: formamidine disulphide ratio and the absolute concentration are determined in several and preferably in each of the stages and adjusted as necessary to maintain optimum conditions as herein indicated. The optimum thiourea: formamidine disulphide ratio will vary according to the leach time.

We have also found that, in multi stage operations, it is desirable to increase the thiourea concentration in succeeding stages, after the first, to improve the rate of transfer of noble metal into solution as the material becomes progressively depleted of noble metal content, and also to minimise the residence time during which thiourea and formamidine disulphide are present in high concentrations so as to avoid their higher consequent decomposition rates which adversely affects leaching rate and adsorption rate as previously mentioned The absolute thiourea concentration in the first and last stages and the increments in thiourea concentration in the intermediate stages will depend on a number of factors including;- the mineralogical nature of the material being leached; the consequential optimum residence time in each of the stages and upon the number of stages optimally employed in any particular case.

The noble metal values may be stripped or recovered from the leachate by any means including:-Carbon-in Leach (CIL), Carbon in Pulp (CIP), cementation onto iron or aluminium; by adsorption onto biomass or ion exchange resin; or obtained by direct electrowinning or by other methods known to those skilled in the art.

To conserve thiourea, the clarified and stripped leach liquor should be treated with sufficient reducing agent to regenerate most or all of the formamidine disulphide it contains to thiourea, the regenerated liquor then being recycled to the leaching circuit. In a multi-stage process, the regenerated liquor is preferably distributed between several, or all of the leach stages. In each stage, the necessary additions may also made of:-
(i) make-up thiourea, sufficient to maintain the required concentration thereof;
(ii) acid to maintain the required pH control; and
(iii) an oxidising or reducing agent to maintain the required thiourea : formamidine disulphide ratio.

The oxidation agent may, for example, be ferric ion, provided that the presence of ferric ion is not otherwise deleterious or undesirable in the stripping stage or elsewhere; alternatively hydrogen peroxide is, inter alia, a suitable oxidation agent.

The reduction agent preferably may be SO₂ in free or combined form typically sodium metabisulphite.

In order that the invention may be more clearly understood the results of a laboratory scale test will now be described by way of example only with reference to the following Examples 1 to 5 below.

### Material

A sample of low grade gold ore, from the Castromil deposit, Portugal, having a gold head grade of about 2.78 g/t and an iron content of 5.12% was subjected to an acid preconditioning leach to remove, inter alia, soluble iron components and then subjected to leaching in accordance with the invention.

### A. Ore Preconditioning:

The ore was pre-treated by washing it in (i) 10% and (ii) 50% sulphuric acid solutions (vol./vol.). The ore was stirred in these solutions where the solid/liquid ratio was maintained at 1:1 and their Iron concentrations measured from time to time. The ore was then re pulped, filtered and dried in preparation for leaching.

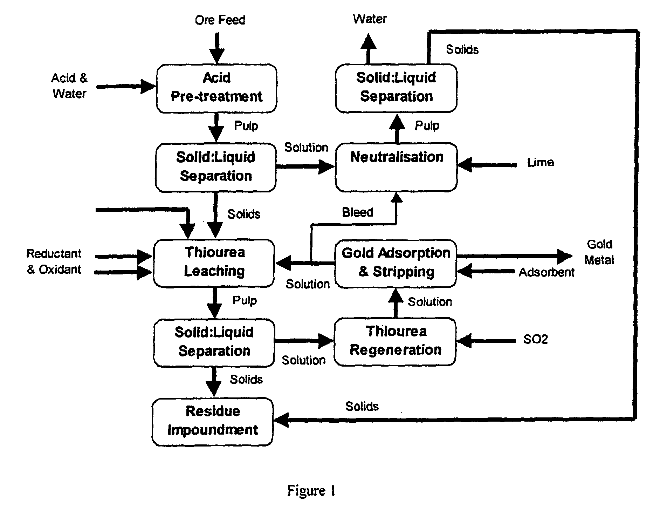

It was found that the 10% acid solution removed 4.2 g of Fe from 500g of ore and the 50% wash removed 5.4g Fe from 500g of ore, both after 24 hours. An Iron leach profile using the 10% acid solution was plotted (Figure 1) showing that 8.4g of Fe is leached from 500g of ore in 101 hours. These tests suggest that a 48 hour wash with 10% acid solution would substantially remove the soluble iron and a correspondingly washed ore sample was prepared for leaching. For Example 1 only an ore specimen was prepared by washing it with a 50% acid solution for 24 hours.

### B. Leaching Tests of Preconditioned Ore

A number of different Thiourea leaching tests were carried out as follows.
In each test the slurry pH was maintained at 2 by the addition of concentrated sulphuric acid as required. The thiourea : formamidine disulphide ratio was maintained between 2:1 and 5:1 during the leach. Control of the ratio was achieved by regular High Pressure Liquid Chromatography (HPLC) analysis. The solid liquid ratio for the slurry was maintained at 1:1 and the residence time at each stage was 6 hours except where indicated. Following filtration of the slurry at the end of each stage all filtrates were stabilised with sodium metabisulphite to prevent sulphur precipitation by converting the unstable formamidine disulphide to thiourea. The ore was then re pulped and dried before being re-leached or sent for Gold residue analysis as appropriate.

### Example1

### Thiourea Leaching of pre-treated Castromil ore

Samples of the 10% and 50% sulphuric acid pre-treated ore were leached with an 8g/l thiourea solution for 24 hours as described above. Table 1 gives the reagent consumption and the percentage gold leached, calculated from the residue results for both tests

**Table 1**

| Batch Test | As Received Ore (no pre-treatment) | Pre treated ore 10% Acid | Pre-treated ore 50% acid |
|---|---|---|---|
| Time (hours) | 24 | 24 | 24 |
| Thiourea consumption (kg/t ore) | 6 | 8 | 8 |
| Sulphuric-acid consumption | Nd | 18.27 | 51.04 |
| Hydrogen-peroxide consumption | Nd | 8.25 | 16.99 |
| Sodium-metabisulphite consumption | Nd | 1.75 | 4.38 |
| % Gold leached | 60.4 | 76.9 | 88.0 |

For comparison purposes results obtained for the as received ore (no pre-treatment) have been included.

The remaining tests were carried out on the 10% sulphuric acid pre-treated ore.

### Example 2

This test was carried out to study the effect on Gold leaching of using a fresh thiourea leaching solution for every stage. The concentration of thiourea in solution was increased from stage to stage. The first leach stage of this batch test used a 2g/l thiourea solution and was carried out as described above for 6 hours. For each subsequent stage the concentration of the thiourea solution was increase by 2g/l each time. The results are set out in Table 2.

**Table 2**

| Stage No. | Time (hours) | Thiourea | Sulphuric Acid | Hydrogen-peroxide | Sodium-meta bisulphite | Cumulative % Gold Leached |
|---|---|---|---|---|---|---|
| | | consumed (kg/t ore | consumed kg/t ore | consumed (kg/t ore) | consumed (kg/t ore) | |
| 1 | 6 | 2 | 2.99 | 6.14 | 3.75 | 13.8 |
| 2 | 6 | 4 | 8.52 | 1.23 | 0.55 | 53.0 |
| 3 | 6 | 6 | 11.56 | 4.28 | 1.36 | N/A* |
| 4 | 6 | 8 | 8.19 | 5.56 | 0.77 | N/A* |
| 5 | 6 | 10 | 9.17 | 4.42 | 0.20 | 91.0 |
| Total | 30 | 30 | 40.43 | 21.63 | 6.63 | 91.0 |

| | | | | | | |
|---|---|---|---|---|---|---|
| * leached samples not sent for analysis | | | | | | |

### Example 3

This test was carried out to study the effect on Gold leaching of using a thiourea solution which was a mixture of fresh thiourea and recycled thiourea, the latter coming from the previous Gold leaching stage. As in Example 2, the thiourea concentration was increased from stage to stage. The first stage used a 2g/l thiourea solution and in the second stage, 4g/l thiourea equivalent solution was used. The process was repeated for 5 more stages each time increasing the thiourea concentration by about 2g/l. The results are set out in Table 3.

**Table 3**

| Stage No. | Time (hours) | Thiourea | Sulphuric Acid | Hydrogen-peroxide | Sodium-meta bisulphite | Cumulative % Gold Leached |
|---|---|---|---|---|---|---|
| | | consumed (kg/t ore | Consumed kg/t ore | consumed (kg/t ore) | Consumed (kg/t ore) | |
| 1 | 6 | 2 | 0 | 2.75 | 0.38 | 11.0 |
| 2 | 6 | 2.82 | 0 | 8.22 | 22.33 | 51.1 |
| 3 | 6 | 3.51 | 2.79 | 5.05 | 0 | 65.3 |
| 4 | 6 | 4.43 | 6.57 | 5.09 | 0 | 73.9 |
| 5 | 6 | 5.64 | 12.30 | 3.99 | 0.38 | 88.0 |
| 6 | 6 | 4.92 | 15.74 | 5.33 | 0.88 | 91.8 |
| 7 | 6 | 6.78 | 2.65 | 3.70 | 0 | 93.7 |
| Total | 42 | 30.1 | 40.05 | 34.13 | 3.97 | 93.7 |

### Example 4

This test was carried out to study the effect on Gold leaching of gradually increasing the concentration of thiourea in a single stage over 6 hours. A 10% thiourea solution was continuously added to a slurry (pH = 2) with a solid to liquid ratio of approximately 1 over a 6 hour period. The rate of addition was such that the concentration of thiourea was 8 gpl after six hours. A second leach on the same material was then carried out, as described above. The results are set out in Table 4.

**Table 4**

| Stage No. | Time (hours) | Thiourea | Sulphuric Acid | Hydrogen-peroxide | Sodium-meta bisulphite | Cumulative % Gold Leached |
|---|---|---|---|---|---|---|
| | | consumed (kg/t ore | Consumed kg/t ore | consumed (kg/t ore) | consumed (kg/t ore) | |
| 1 | 6 | 7 | 6.85 | 2.32 | 0 | 66.0 |
| 2 | 6 | 7.07 | 5.57 | 1.71 | 0 | 82.1 |
| Total | 12 | 14.07 | 12.42 | 4.03 | 0 | 82.1 |

### Example 5

This test was carried out to study the effect on Gold leaching when an 8g/l thiourea solution was used over a period of 24 hours. An additional leach of the same material was carried out for 6 hours again using 8g/l thiourea. The results are set out in Table 5.

**Table 5**

| Stage No. | Time (hours) | Thiourea | Sulphuric Acid | Hydrogen-peroxide | Sodium-meta bisulphite | Cumulative % Gold Leached |
|---|---|---|---|---|---|---|
| | | consumed (kg/t ore | Consumed kg/t ore | consumed (kg/t ore) | Consumed (kg/t ore) | |
| 1 | 24 | 8 | 9.65 | 2.37 | 1.33 | 83.2 |
| 2 | 6 | 8 | 10.88 | 3.75 | 0 | 91.1 |
| Total | 30 | 16 | 19.53 | 6.12 | 1.33 | 91.1 |

A flowsheet of the proposed process is presented in Figure 1.

## Claims

1. A process for the hydrometallurgical recovery of noble metals from materials containing them by lixiviation with an aqueous acidic solution of thiourea in the presence of an oxidising agent and a reducing agent, wherein the concentration of thiourea in the solution is determined by analysis and an amount of oxidising agent or reducing agent is added to the solution **characterised in that** the concentration of formamidine disulphide in the solution is determined by analysis and the added amount of oxidising agent or reducing agent is controlled to maintain the molar ratio of thiourea: formamidine disulphide to between 2:1 and 5:1.

2. A process as claimed Claim 1 in which the determination of the thiourea concentration and of the thiourea : formamidine disulphide ratio is regularly performed by means of high pressure liquid chromatographic method.

3. A process as claimed in Claims 1 or 2 in which the material to be lixiviated is subjected to pre-treatment with an acid solution to substantially remove any soluble Iron components therefrom.

4. A process as claimed in Claims 1-3 in which the lixiviation is carried out in a plurality of successive stages.

5. A process as claimed in Claim 4 which the pregnant solution from the final stage is stripped of its noble metal values and the resultant barren solution is treated with a reduction agent to regenerate thiourea from the formamidine disulphide contained therein prior to being recycled to a preceding stage.

6. A process as claimed in claims 4 or 5 in which the thiourea concentration in solution is maintained between 1 g/l and 15g/l.

7. A process as claimed in Claim 6 in which the pH of the solution is maintained in the range of about 0.5 to 2.

8. A process as claimed in any preceding Claim in which ground material is dispersed in the solution in which the solids content is maintained within the range of 10 to 60% w/w.

9. A process as claimed in Claim 8 in which the temperature is maintained between 18 and 30 degrees C.

10. A process as claimed in Claims 4-9 in which the thiourea concentration increases incrementally between the first stage and the final stage.

11. A process as claimed in any preceding claim in which the noble metal value is recovered by means of carbon adsorption, solvent extraction, ion exchange, direct electrowinning or adsorption onto biomass.

12. A process as claimed in any preceding Claim the acid used is sulphuric acid.

## Patentansprüche

1. Verfahren zur hydrometallurgischen Gewinnung von Edelmetallen aus dieser enthaltenden Materialien durch Auslaugung mit einer wässrigen Säurelösung von Thioharnstoff in Anwesenheit eines Oxidationsmittels und eines Reduktionsmittels, wobei die Konzentration des Thioharnstoffes in der Lösung durch Analyse bestimmt wird und eine Menge des Oxidationsmittels oder Reduktionsmittels der Lösung beigegeben wird, **dadurch gekennzeichnet, dass** die Konzentration von Formamidindisulfit in der Lösung durch Analyse bestimmt wird, und dass die zugegebene Menge des Oxidationsmittels oder Reduktionsmittels gesteuert wird, um das Molarverhältnis von Thioharnstoff zu Formamidindisulfit zwischen 2:1 und 5:1 zu halten.

2. Verfahren nach Anspruch 1, **dadurch gekennzeichnet, dass** die Bestimmung der Thioharnstoffkonzentration und des Verhältnisses von Thioharnstoff zu Formamidindisulfit regelmässig mittels eines Hochdruck-Flüssigchromatographieverfahrens durchgeführt wird.

3. Verfahren nach Anspruch 1 oder 2, **dadurch gekennzeichnet, dass** das auszulaugende Material einer Vorbehandlung mit einer Säurelösung unterzogen wird, um im wesentlichen sämtliche löslichen Eisenbestandteile aus diesem zu entfernen.

4. Verfahren nach einem der Ansprüche 1 bis 3, **dadurch gekennzeichnet, dass** die Auslaugung in einer Vielzahl aufeinanderfolgenden Stufen durchgeführt wird.

5. Verfahren nach Anspruch 4, **dadurch gekennzeichnet, dass** die tragende Lösung von der Endstufe hinsichtlich der Edelmetallgehalte entmetallisiert wird, und dass die resultierende ausgelaugte Lösung mit einem Reduktionsmittel behandelt wird, um die Thioharnsäure von dem darin enthaltenen Formamidindisulfit zu regenerieren, ehe sie zu einer der vorausgehenden Stufe recycelt wird.

6. Verfahren nach Anspruch 4 oder 5, **dadurch gekennzeichnet, dass** die Thioharnsäurekonzentration in Lösung zwischen 1 g/l und 15 g/l gehalten wird.

7. Verfahren nach Anspruch 6, **dadurch gekennzeichnet, dass** der pH-Wert der Lösung in dem Bereich zwischen etwa 0,5 und 2 gehalten wird.

8. Verfahren nach einem der vorstehenden Ansprüche, **dadurch gekennzeichnet, dass** das Ausgangsmaterial in der Lösung dispergiert ist, wobei der Feststoffgehalt in dem Bereich von 10 bis 60 Gew.-% gehalten wird.

9. Verfahren nach Anspruch 8, **dadurch gekennzeichnet, dass** die Temperatur zwischen 18 und 30°C gehalten wird.

10. Verfahren nach einem der Ansprüche 4 bis 9, **dadurch gekennzeichnet, dass** die Thioharnsäurekonzentration schrittweise zwischen der ersten und der letzten Stufe zunimmt.

11. Verfahren nach einem der vorstehenden Ansprüche, **dadurch gekennzeichnet, dass** der Edelmetallgehalt mittels Kohlenstoffadsorption, Lösungsextraktion, Ionenaustausch, direkte elektrolytische Extraktion oder Adsorption in Biomasse gewonnen werden.

12. Verfahren nach einem der vorstehenden Ansprüche, bei welchem die verwendete Säure Schwefelsäure ist.

## Revendications

1. Procédé pour la récupération hydro-métallurgique de métaux nobles à partir de matériaux qui les contiennent, par lixiviation avec une solution acide aqueuse de thiourée en présence d'un agent oxydant et d'un réducteur, la concentration de thiourée en solution étant déterminée par analyse et une quantité d'agent oxydant ou de réducteur étant ajoutée à cette solution, **caractérisé en ce que** la concentration de bisulfure de formamidine dans la solution est déterminée par analyse et la quantité d'agent oxydant ou de réducteur est contrôlée de sorte à maintenir un rapport molaire thiourée : bisulfure de formamidine compris entre 2:1 et 5:1.

2. Procédé selon la revendication 1 dans lequel la détermination de la concentration de thiourée et du rapport thiourée : bisulfure de formamidine est effectuée régulièrement au moyen d'un procédé chromatographique à liquide sous haute pression.

3. Procédé selon les revendications 1 ou 2 dans lequel le matériau à lixivier est soumis à un traitement préalable avec une solution acide destiné à en éliminer substantiellement les composants ferreux solubles.

4. Procédé selon l'une des revendications 1 à 3 dans lequel la lixiviation est effectuée en une pluralité d'étapes successives.

5. Procédé selon la revendication 4 dans lequel la solution fraîche additionnée obtenue lors de la dernière étape est strippée de ses valences en métaux nobles et la solution stérile ainsi obtenue est traitée avec un réducteur de sorte à régénérer la thiourée à partir du bisulfure de formamidine présent dans la solution avant d'être ramenée à l'étape précédente par recyclage.

6. Procédé selon les revendications 4 ou 5 dans lequel la concentration de thiourée en solution est maintenue entre 1 g/l et 15 g/l.

7. Procédé selon la revendication 6 dans lequel le pH de la solution est maintenu dans une plage d'environ 0,5 à 2.

8. Procédé selon l'une quelconque des revendications précédentes dans lequel de la matière broyée est dispersée dans la solution où la teneur en solides est maintenue dans une plage de 10 à 60 % en poids.

9. Procédé selon la revendication 8 dans lequel la température est maintenue entre 18 et 30 degrés centigrade.

10. Procédé selon les revendications 4 à 9 dans lequel la concentration de thiourée augmente de manière incrémentielle entre la première et la dernière étape.

11. Procédé selon l'une quelconque des revendications précédentes dans lequel la valence de métal noble est récupérée par adsorption du carbone, extraction par solvant, échange ionique, extraction électrolytique ou adsorption dans la biomasse.

12. Procédé selon l'une quelconque des revendications précédentes dans lequel l'acide utilisé est l'acide sulfurique.
